# EUROPEAN PATENT SPECIFICATION

(11) **EP 1 844 430 B1**
(45) Date of publication and mention of the grant of the patent: **28.05.2008**
(21) Application number: 06709628.9
(22) Date of filing: 03.02.2006
(51) Int. Cl.: G06M 1/04, G01F 3/08, G01F 15/07

(54) **A COUNTER FOR A FLUID FLOW METER**
ZÄHLER FÜR EINEN FLUIDSTRÖMUNGSMESSER
COMPTEUR POUR DEBITMETRE DE FLUIDE

(30) Priority: 04.02.2005 GB 0502351
(43) Date of publication of application: 17.10.2007
(73) Proprietor: Elster Metering Limited, Luton, Bedfordshire LU1 3LJ (GB)
(72) Inventor: HOLMES-HIGGIN, Ian, Luton, Beds LU1 3LJ (GB); YOUNG, Ian, Luton, Beds LU1 3LJ (GB); DAVIS, Peter, Luton, Beds LU1 3LJ (GB)
(74) Representative: Moir, Michael Christopher
(86) International application number: PCT/GB2006/000381
(87) International publication number: WO 2006/082422

(56) References cited:
- GB-A- 733 371
- US-A- 3 701 277

## Description

### TECHNICAL FIELD

The present invention relates to counters and is particularly applicable to counters for fluid flow meters especially water meters:

### BACKGROUND ART

Flow meters are well known in the art. They typically employ a count display device which is operatively coupled to a rotary piston or other metering device and are enclosed in the flow meter's housing. The count display device usually comprises a series of gearedly connected wheels having indicia on respective external faces to indicate the volume of fluid which has passed through the flow meter.

Rotary motion of the rotary piston rotates a drive shaft which in turn drives a separate gear assembly gearedly connected to the count display wheels. The gear assembly is used to step down the rotational speed of the drive shaft to the counter wheels. The count display device and gear assembly are mounted within the flow meter's housing, and thus are subject to the flow of fluid therethrough. The count display device has a window for viewing the indicia, the window being adapted to protrude through a complementary opening in the housing, and to seal therewith.

The flow rate of fluid and therefore pressure in the housing is variable. The design of the housing, window, seal and mounting of the count display device and gear assembly to the housing attempt to take the pressure changes into account. However distortions in the housing due to variable fluid pressure during operation may result in leakage about the seal, and/or increased friction between gear wheels communicated from the housing via the mounting.

It is an object of the invention to overcome or ameliorate at least one of the deficiencies of the prior art, or at least to provide a suitable alternative thereto.

### SUMMARY OF THE PRESENT INVENTION

According to a first aspect of the invention there is provided a fluid flow meter comprising a counter mounted within a housing of the meter, the counter comprising:
a count display device for indicating a volume of fluid having passed through the meter, the count display device having a window configured to seat sealingly in an aperture in the housing;
driving means for driving the count display device, the driving means comprising a load-bearing frame having a gear train mounted thereto; and
mounting means configured to bias the counter toward the aperture to seal the window thereon, and to provide a biasing force to a portion of the load-bearing frame, the frame being configured such that the biasing force is prevented from affecting relative alignment of gears of the gear train.

Advantageously, since the biasing force is not applied to the gears of the gear train, the alignment of the gears is not affected by the biasing force which may otherwise detrimentally affect the operation of the counter. For example, undesired friction may otherwise be introduced to the gear train during operation.

Preferably the frame comprises first and second frame components supporting the gears of the gear train therebetween, the frame portion being on the first frame component such that the biasing force is applied through the first frame component. The frame portion is preferably a flat surface for mounting on a complementary flat surface of the mounting means. Preferably the biasing force is applied in a direction perpendicular to the axes of rotation of the gears.

Preferably each of the gears is on a respective axle and the axles are parallel, and preferably the first and second frame components are configured respectively to support respective ends of the axles.

Preferably the frame component comprises a supporting wall for supporting a respective one end of each of the axles, and the frame portion is on a mounting wall perpendicular to the axle supporting wall. Preferably the first frame component comprises a second supporting wall for supporting the count display device, the second supporting wall being perpendicular to the axle supporting wall. The axle and second supporting walls are preferably on parallel planes, and located at opposite ends of the mounting wall.

Preferably the second frame component is an axle supporting plate and lies on a plane parallel to the supporting wall of the first frame component.

Preferably the mounting means comprises two spaced apart blocks biased away from each other in a relative lateral direction. The blocks are preferably biased in a lateral direction with respect to the count display device.

Preferably each of the two blocks comprises a flat surface on one side, the complementary flat surface of the mounting means comprising the flat surfaces of the two blocks.

Preferably one of the gears of the gear train is directly driveable by a drive shaft which is rotatable in response to fluid flowing through the flow meter, and the axes of rotation of the gears are parallel to the drive shaft.

The fluid flow meter preferably comprises a rotor, rotation of which is related to the volume of fluid passing through the housing, the drive shaft being rotatable in response to rotation of the rotor.

Preferably the count display device comprises a worm gear, and one of the plurality of gears is adapted to drive a worm for driving the worm gear. The worm may be coaxial with the gear adapted to drive the worm.

The count display device preferably comprises a plurality of coaxial counting gears having indicia thereon for displaying a representation of the volume of fluid having passed through the flow meter, and the worm gear is preferably co-axial with or its rotational axis is parallel to the axes of the counting gears.

The count display device and driving means may comprise complementary male and female portions for mounting the count display device to the driving means. The second supporting wall of the first frame component may comprise the female portions.

According to another aspect of the invention there is provided fluid flow meter comprising a counter as described above in relation to the first aspect of the invention.

### BRIEF DESCRIPTION OF THE DRAWINGS

Preferred embodiments of the invention will now be described, by way of example only, with reference to the accompanying drawings in which:
Figure 1 is a side elevation of an embodiment of a fluid flow meter according to an embodiment of the present invention;
Figure 2 is a cross-sectional side elevation of the flow meter of Figure 1;
Figure 3 illustrates a perspective view of a portion of the flow meter of Figure 1;
Figure 4 illustrates a perspective view of a counter according to an embodiment of the present invention;
Figure 5 is a detail view of Figure 2 illustrating an end elevation of the counter;
Figure 6 is an exploded isometric view of the counter illustrated in Figure 5; and
Figures 7 to 10 are various views of the gear assembly illustrated in Figures 2 to 6.

### DETAILED DESCRIPTION OF THE PREFERRED EMBODIMENTS

Referring to the Figures, a preferred embodiment of the invention comprises a fluid flow meter in the form of a rotary piston flow meter **10** employed as a utility meter, for example. As is known in the art, rotary piston flow meters comprise a rotary piston **12** which displaces fluid by moving eccentrically around the inside of a cylinder **14** in the meter's housing **16** between an inlet **18** and an outlet **20.** The operation of rotary piston flow meters is described in our US Patent No. US-A-5567876, the description of which is incorporated herein by reference.

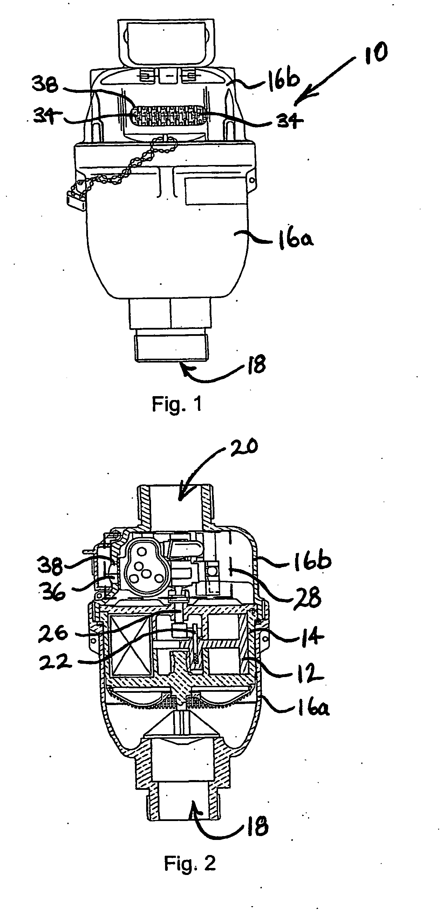

Referring to Figures 1 and 2, the housing comprises two threadedly engaged parts **16a, 16b.** The first part **16a** houses the cylinder **14** and the rotary piston **12.** A post **22** on the piston **12** extends axially therefrom and is adapted to rotate a shaft **26** for driving a counter **28** housed in a second part **16b** of the housing.

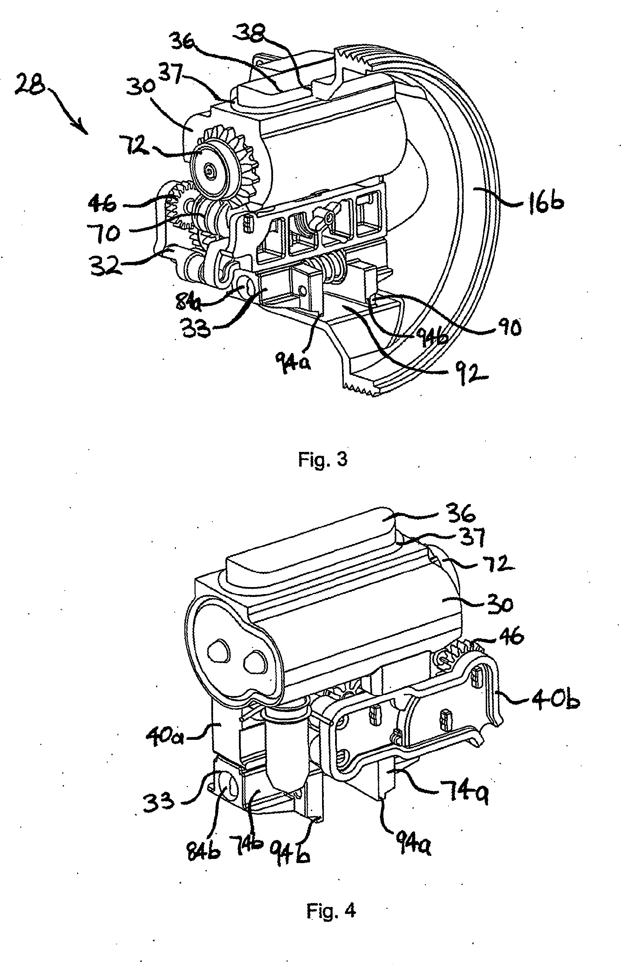

As illustrated in Figures 3 to 6, the counter comprises a count display device **30,** a driving means in the form of a gear box **32** for driving the count display device **30** and a mounting means in the form of a ramp assembly **33** for mounting the counter **28** to the second housing part **16b.**

The count display device **30** illustrated in the Figures is a liquid fillable count display device as described in our UK Patent Application No. 0328882.6, however as will be appreciated, any appropriate liquid fillable or non-liquid filled count display device may also be used. The count display device **30** indicates the volume of fluid having passed through the meter **10.** As illustrated in Figure 1, to indicate the volume of fluid, the count display device has numerical indicia **34** which are visible through a window **36.** The window **36,** together with an o-ring **37**, is configured to seat sealingly in an aperture **38** of the second part **16b** of the housing to prevent leakage of fluid through the aperture **38.**

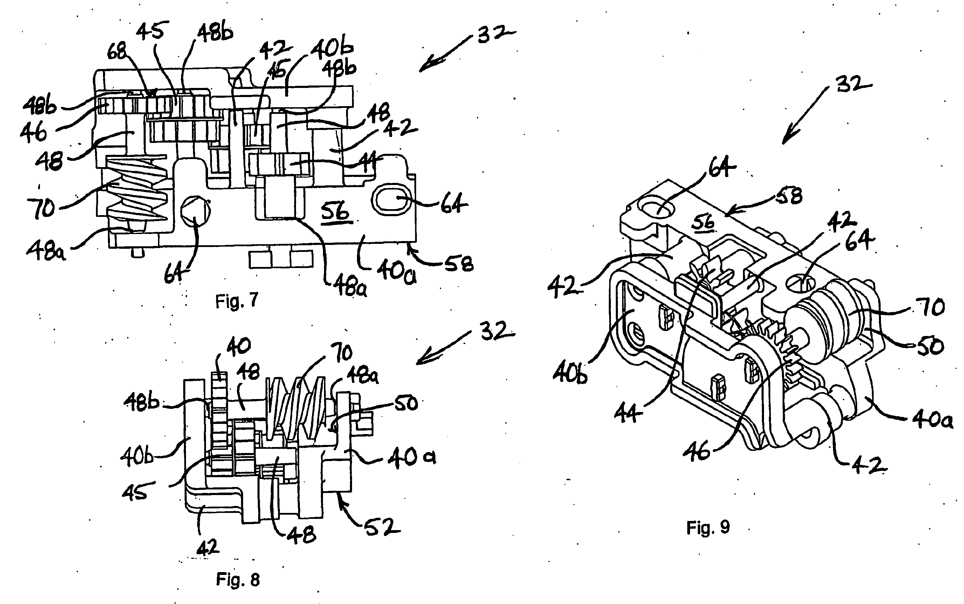

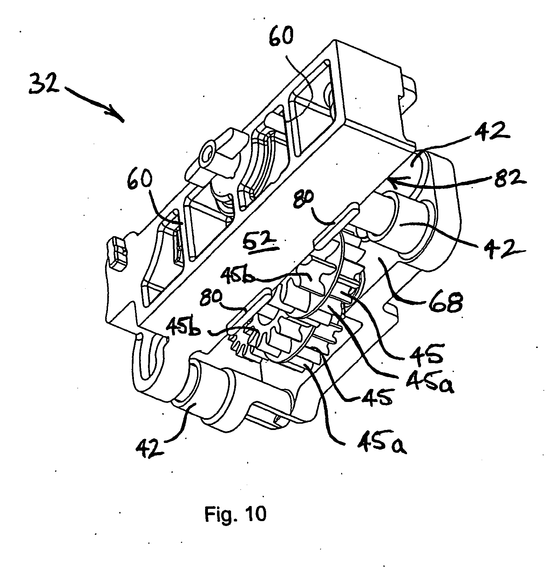

Figures 7 to 10 illustrate the gear box in more detail. The gear box comprises a load bearing frame **40** comprising a first and a second frame component **40a, 40b,** which are mounted together by corresponding friction-fitted and/or snap-lockingly fitted male and female portions **42,** to form the frame **40.** A plurality of gears **44, 45, 46** of a gear train for driving the count display device **30** are rotatably mounted on parallel axles **48** between the first and second frame components **40a, 40b.** Two gears **45** are provided with dual sets **45a, 45b** of gear teeth of different pitch per set.

A portion of the frame, being the first frame component **40a,** is of a load-bearing box-like construction. It comprises a supporting wall **50** for rotatably supporting an end **48a** of each axle **48,** a flat surfaced mounting wall **52** for mounting on a complementary flat surface **54** of the ramp assembly **33,** and a second mounting wall **56** for supporting the count display device **30.** The mounting wall **52** and the second mounting wall **56** lie on parallel planes and extend perpendicularly from opposite edges **58** of the axle supporting wall **50.** The first frame component **40a** includes structural ribs **60** between all three walls **50, 52, 56** to enhance the load-bearing ability of the first frame component **40a.**

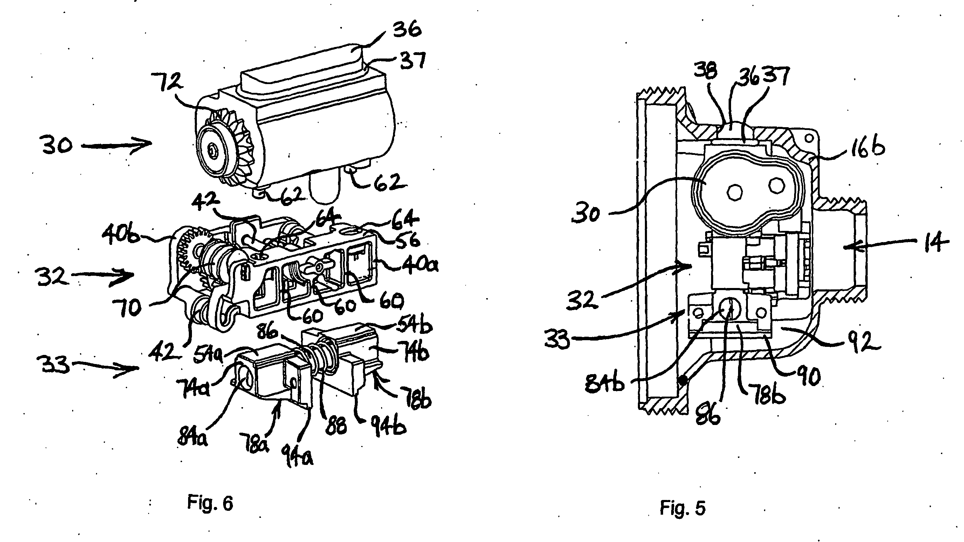

The second mounting wall **52** of the first frame component **40a** and the count display device **30** comprise complementary male and female portions to assist in mounting the count display device **30** to the gear box **32.** Referring to the embodiment illustrated in Figure 6, the male portions, in the form of posts **62,** are located on the count display device **30** and the female portions, in the form of recesses **64,** are located on the second supporting wall **56** of the gearbox **32.** The posts **62** are configured to friction fit to the recesses **64.**

The second frame component **40b** is of a plate-like construction, having a supporting wall **68** for supporting another end **48b** of each axle **48.**

As described above, the gear train is assembled between the first and second frame components **40a, 40b.** As illustrated in Figure 2, the shaft **26** is connected to the rotational axis of a primary gear **44** for the rotation thereof. Primary gear **44** is gearedly connected to three gears **45, 46.** The gears' axles **48** are parallel to the rotational axis of the shaft **26.**

On the gear **46** furthest from the primary gear **44** is a worm **70** coaxial with the furthest gear **46.** The worm **70** is configured to drive a worm gear **72** on an outer end of the count display device **30.** The rotational axis of the worm gear **72** is either coaxial with or parallel to the rotational axes of the gearedly connected counting wheels (not shown) in the count display device **30.**

The configuration of the gears **44, 45, 46** of the gear box **32** with respect to the shaft **26** and count display device **30** requires only one worm **70** and one worm gear **72,** compared to the need for at least two worms and worm gears in prior art gear boxes. This has been achieved by changing the planar orientation of the gears such that they lie on rotational axes parallel to the rotational axis of the shaft **26.** Since a relatively high amount of friction is caused between worms and worm gears when compared to standard gears, the reduction of the number of worms and worm gears in the present embodiment reduces the overall friction of the gear box.

The gears, **44, 45, 46** convey the rotation of the piston **12** to the count display device **30**, as well as translate the rotational input of the shaft **26** laterally from the primary gear **44** to the worm gear **72.** As will be understood, different gear ratios may be used depending on the size of the chamber, or the units of measurement displayed by the count display device **30.** The gear ratios may serve to increase, decrease or retain the speed of rotation of the shaft **26** through the gear train. Furthermore, whereas the gear box **32** of the preferred embodiment employs four gears **44, 45, 46,** alternative embodiments may use more or fewer gears.

The ramp assembly **33** comprises two spaced apart blocks **74a, 74b,** each comprising coplanar flat surfaces **54a, 54b** on one side thereof and ramp surfaces **78a, 78b** on an opposite side thereof. The flat surfaces **54a, 54b,** together forming the complementary flat surface **54** referred to above, are configured to support the gear box **32** on the mounting wall **52** of the first frame component **40a.** Due to the flat nature of the mounting wall **52** and the coplanar flat surfaces **54a, 54b** of the ramp assembly **33**, the flat surfaces **54a**, **54b** are laterally slidable upon the flat side **40a** of the first frame component. However, stop means in the form of two upstanding ridges **80** are provided along one edge **82** of the mounting wall **52** to prevent the ramp assembly sliding off the mounting wall **52** and into the gears **44**, **45**, **46**.

The two blocks **74a, 74b** each comprise a respective coaxial bore **84a, 84b** with a support rod **86** therein. The blocks **74a, 74b** are slidable on the rod **86.** A helical spring **88** is located on the rod **86** between the spaced apart blocks **74a, 74b** biasing the two blocks **74a, 74b** apart. When the counter **28** is assembled, the biasing direction of the two spaced apart blocks **74a, 74b** is a parallel direction with respect to the mounting wall **52** surface.

The ramp surfaces **78a, 78b** of the ramp assembly **33** are slidable upon slide surfaces in the form of ribs **90** projecting from a wall **92** of the second housing part **16b.** Opposed ends of the ramp surfaces **78a, 78b** comprise respective flanges **94a, 94b** which abut the ribs **90** when the spaced apart blocks **74a, 74b** are biased from each other to a predetermined maximum extent. The flanges **94a,** 94b ensure the spaced apart blocks **74a**, **74b** do not move away from each other beyond a maximum allowable distance.

As illustrated in Figures 2 and 3, the counter is assembled in the second housing part **16b,** by locating the ramp surfaces on the ribs **90,** the first frame component of the gear box **32** on the flat surface **54**, and the count display device **30** on the gear box **32,** as described above. Once assembled therefore, the biasing of the spaced apart blocks **74a**, **74b** away from each other provides a net bias force through the load-bearing first frame component **40a** only to the count display device **30** to bias the window **36** into a sealed position against the aperture **38.** Second frame component **40b** is carried solely from first frame component **40a** via fitted male and female portions **42.** Biasing forces go only through first frame component **40a** which is a robust internally braced box section which does not distort. The relative alignment of the gears **44, 45, 46** is therefore not affected by the biasing force.

Furthermore, in use, the counter **28** is in the path of the fluid flowing through the flow meter **10.** The flow rate of the fluid through the meter **10** is variable depending for example on quality of fluid supply and use patterns of the user. This means the pressure exerted by the fluid within and to the flow meter **10** is also variable. This variability may distort the shape of the flow meter **10** or impact the position of the components of the counter **28** within the housing **16.** For example, the meter **10** may be susceptible to water hammer at certain fluid flow rates which may distort the shape of the housing. Therefore, the ramp assembly is also configured to be adjustable to adapt to the changes in fluid pressure and ensure the window **36** remains sealingly seated in the aperture **38.**

If the biasing force of the ramp assembly **33** were to be provided to both the first and second frame components **40a, 40b,** changes in internal pressure of the meter **10** may mean different biasing forces are provided to the first and second frame components **40a**, **40b.** Since the axles **48** are mounted on the first and second frame components, if different biasing forces are provided thereto, the axles will become misaligned causing undesired friction between the gears **44, 45, 46.** However, in the present embodiment the gear box **32** bears the load of the biasing force through only the first frame component **40a** and not through the second frame component **40b.**

As will be appreciated, the above described configuration of the gear box frame has allowed for the gears **44, 45, 46** to be rearranged wherein their rotational axes are parallel to the rotational axis of the shaft **26.** This has in turn allowed for the reduction in the number of worms and worm gears, as described above, reducing the overall internal friction of the counter to improve its operation.

While the invention has been described in reference to its preferred embodiments, it is to be understood that the words which have been used are words of description rather than limitation and that changes may be made to the invention without departing from its scope as defined by the appended claims. For instance, the invention is not limited to the application of metering of water, but may be used in other metering applications such as, for example, for beverages or petrol (gasoline), or in a gas meters. Furthermore, as will be appreciated by the skilled addressee, while the invention has been described with reference to a single piston fluid flow meter, it may be adapted for use with a dual piston fluid flow meter, or in other displacement flow meters, such as, but not being limited to, nutating disc meters. In further alternative embodiments, the counter may be adapted for use in inferential flow meters, such as, but not being limited to, single-jet flow meters, multi-jet flow meters, bi-rotor flow meters, or helical-rotor meters such as that sold under our registered trademark HELIX.

The text of the abstract filed herewith is repeated here as part of the specification.

A counter for a fluid flow meter comprises a count display device, a driving means and mounting means for mounting the driving means and count display device to a housing of the fluid flow meter. The count display device indicates a volume of fluid having passed through the meter and has a window configured to seat sealingly in an aperture in the housing. The driving means drives the count display device and comprises a load-bearing frame having a gear train mounted thereto. The mounting means is configured to bias the counter toward the aperture to seal the window thereon, and to provide a biasing force to a portion of the load-bearing frame. The frame is configured such that the biasing force is prevented from affecting relative alignment of gears of the gear train.

## Claims

1. A fluid flow meter, comprising:
a counter (28) mounted within a housing (16) of the meter, the counter comprising:
a count display device (30) for indicating a volume of fluid having passed through the meter, the count display device having a window (36) configured to seat sealingly in an aperture (38) in the housing;
driving means for driving the count display device, the driving means comprising a load-bearing frame (40a, 40b) having a gear train (44, 45, 46) mounted thereto; and
**characterised in that** the meter comprises mounting means configured to bias the counter toward the aperture to seal the window thereto (33), and to provide a biasing force to a portion (52) of the load-bearing frame, the frame being configured such that the biasing force is prevented from affecting relative alignment of gears of the gear train.

2. The meter according to claim 1 wherein the frame comprises first (40a) and second (40b) frame components supporting the gears of the gear train therebetween, the frame portion (52) being on the first frame component such that the biasing force is applied only through the first frame component.

3. The meter according to claim 1 or 2 wherein the biasing force is applied in a direction perpendicular to the axes of rotation of the gears (44, 45, 46).

4. The meter according to any preceding claim wherein the frame portion is a flat surface (52) for mounting on a complementary flat surface (54) of the mounting means.

5. The meter according to claims 2 to 4 wherein each of the gears (44, 45, 46) is on a respective axle (48) and the axles are parallel, and wherein the first and second frame components (40a, 40b) are configured respectively to support respective ends of the axles.

6. The meter according to claim 5 wherein the first frame component (40a) comprises a supporting wall (50) for supporting a respective one end of each of the axles, and wherein the frame portion is on a mounting wall (52) perpendicular to the axle supporting wall.

7. The meter according to claim 6 wherein the first frame component comprises a second supporting wall (56) for supporting the count display device (30), the second supporting wall being perpendicular to the axle supporting wall (50).

8. The meter according to claims 2 to 7 wherein the second frame component (40b) is an axle supporting plate and lies on a plane parallel to the supporting wall (50) of the first frame component.

9. The meter according to claim 7 or claim 8 when dependent on claim 7 wherein the axle supporting wall (50) and second supporting wall (56) are on parallel planes, and located at opposite ends of the mounting wall.

10. The meter according to any preceding claim wherein the mounting means comprises two spaced apart blocks (74a, 74b) biased away from each other in a relative lateral direction.

11. The meter according to claim 10 wherein the blocks (74a, 74b) are biased in a lateral direction with respect to the count display device (30).

12. The meter according to claim 10 or 11 when dependent from claim 4 wherein each of the two blocks comprises a flat surface (54a, 54b) on one side and a ramp surface (78a, 78b) of the two blocks on an opposite side, the flat surfaces providing said complementary surface (54)

13. The meter according to any preceding claim wherein one of the gears of the gear train is directly driveable by a drive shaft (26) which is rotatable in response to fluid flowing through the flow meter, and wherein the axes of rotation (48) of the gears are parallel to the drive shaft.

14. The meter according to any preceding claim wherein the count display device comprises a worm gear (72), and one of the gears (46) of the gear train is adapted to drive a worm (70) for driving the worm gear (72).

15. The meter according to any preceding claim wherein the count display device (30) and driving means (32) comprise complementary male (62) and female (64) portions for mounting the count display device (30) to the driving means (32).

16. The meter according to claim 7 or any claim dependent therefrom wherein the second supporting wall (56) of the first frame component (40a) comprises the female portions (64).

## Patentansprüche

1. Fluidströmungsmesser, umfassend:
einen Zähler (28), der innerhalb eines Gehäuses (16) des Messers montiert ist, wobei der Zähler umfasst:
eine Zählanzeigeeinrichtung (30) zur Angabe eines Volumens von Fluid, welches den Messer durchströmt hat, wobei die Zählanzeigeeinrichtung ein Fenster (36) aufweist, das so gestaltet ist, dass es abdichtend in einer Öffnung (38) im Gehäuse sitzt;
Antriebsmittel zum Antrieb der Zählanzeigeeinrichtung, wobei die Antriebsmittel einen Lasttragrahmen (40a, 40b) mit einem Räderwerk (44, 45, 46) umfassen, das an demselben montiert ist; und
**dadurch gekennzeichnet, dass** der Messer Montagemittel umfasst, die so gestaltet sind, dass sie den Zähler zur Öffnung hin vorspannen, um das Fenster an dieselbe (33) zu siegeln, und dass sie einem Abschnitt (52) des Lasttragrahmens eine Vorspannkraft liefern, wobei der Rahmen so gestaltet ist, dass die Vorspannkraft daran gehindert wird, die relative Ausrichtung von Zahnrädern des Räderwerks zu beeinträchtigen.

2. Messer nach Anspruch 1, wobei der Rahmen eine erste (40a) und eine zweite (40b) Rahmenkomponente umfasst, welche die Zahnräder des Räderwerks zwischen sich tragen, wobei sich der Rahmenabschnitt (52) so auf der ersten Rahmenkomponente befindet, dass die Vorspannkraft nur durch die erste Rahmenkomponente beaufschlagt wird.

3. Messer nach Anspruch 1 oder 2, wobei die Vorspannkraft in einer zu den Rotationsachsen der Zahnräder (44, 45, 46) senkrechten Richtung beaufschlagt wird.

4. Messer nach einem der vorhergehenden Ansprüche, wobei der Rahmenabschnitt eine flache Fläche (52) zum Montieren auf einer komplementären flachen Fläche (54) der Montagemittel ist.

5. Messer nach Anspruch 2 bis 4, wobei sich jedes der Zahnräder (44, 45, 46) auf einer jeweiligen Achse (48) befindet und die Achsen parallel sind, und wobei die erste und die zweite Rahmenkomponente (40a, 40b) jeweils so gestaltet sind, dass sie jeweilige Enden der Achsen tragen.

6. Messer nach Anspruch 5, wobei die erste Rahmenkomponente (40a) eine Tragwand (50) umfasst, welche ein einziges jeweiliges Ende jeder der Achsen trägt, und wobei sich der Rahmenabschnitt auf einer Montagewand (52) befindet, die senkrecht zur Achsentragwand ist.

7. Messer nach Anspruch 6, wobei die erste Rahmenkomponente eine zweite Tragwand (56) umfasst, welche die Zählanzeigeeinrichtung (30) trägt, wobei die zweite Tragwand senkrecht zur Achsentragwand (50) ist.

8. Messer nach Anspruch 2 bis 7, wobei die zweite Rahmenkomponente (40b) eine Achsentragplatte ist und in einer Ebene liegt, die parallel zur Tragwand (50) der ersten Rahmenkomponente ist.

9. Messer nach Anspruch 7 oder Anspruch 8, wenn abhängig von Anspruch 7, wobei die Achsentragwand (50) und die zweite Tragwand (56) in parallelen Ebenen liegen, und sich an gegenüberliegenden Enden der Montagewand befinden.

10. Messer nach einem der vorhergehenden Ansprüche, wobei das Montagemittel zwei voneinander beabstandete Blöcke (74a, 74b) umfasst, die voneinander weg in eine relative seitliche Richtung vorgespannt sind.

11. Messer nach Anspruch 10, wobei die Blöcke (74a, 74b) in einer seitlichen Richtung in Bezug auf die Zählanzeigeeinrichtung (30) vorgespannt sind.

12. Messer nach Anspruch 10 oder 11, wenn abhängig von Anspruch 4, wobei jeder der beiden Blöcke eine flache Fläche (54a, 54b) auf einer Seite und eine Rampenfläche (78a, 78b) der beiden Blöcke auf einer gegenüberliegenden Seite umfasst, wobei die flachen Flächen die komplementäre Fläche (54) zur Verfügung stellen.

13. Messer nach einem der vorhergehenden Ansprüche, wobei eines der Zahnräder des Räderwerks direkt antreibbar ist durch eine Antriebswelle (26), die in Reaktion auf durch den Strömungsmesser strömendes Fluid drehbar ist, und wobei die Rotationsachsen (48) der Zahnräder parallel zur Antriebswelle sind.

14. Messer nach einem der vorhergehenden Ansprüche, wobei die Zählanzeigeeinrichtung ein Schneckenrad (72) umfasst, und eines (46) der Zahnräder des Räderwerks so angepasst ist, dass es eine Schnecke (70) zum Antreiben des Schneckenrads (72) antreibt.

15. Messer nach einem der vorhergehenden Ansprüche, wobei die Zählanzeigeeinrichtung (30) und die Antriebsmittel (32) komplementäre männliche (62) und weibliche (64) Abschnitte zum Montieren der Zählanzeigeeinrichtung (30) an den Antriebsmitteln (32) umfassen.

16. Messer nach Anspruch 7 oder einem davon abhängigen Anspruch, wobei die zweite Tragwand (56) der ersten Rahmenkomponente (40a) die weiblichen Abschnitte (64) umfasst.

## Revendications

1. Débitmètre de fluide, comprenant :
un compteur (28) monté à l'intérieur d'un boîtier (16) du débitmètre, le compteur comprenant :
un dispositif d'affichage de compte (30) pour indiquer un volume de fluide ayant traversé le débitmètre, le dispositif d'affichage de compte possédant une fenêtre (36) configurée pour se loger de façon hermétique dans une ouverture (38) dans le boîtier ; des moyens d'entraînement pour entraîner le dispositif d'affichage de compte, les moyens d'entraînement comprenant un cadre de support de charge (40a, 40b) possédant un train d'engrenages (44, 45, 46) monté sur celui-ci ; et
**caractérisé en ce que** le débitmètre comprend des moyens de montage configurés pour solliciter le compteur vers l'ouverture pour fermer hermétiquement la fenêtre sur celui-ci (33), et pour fournir une force de sollicitation à une partie (52) du cadre de support de charge, le cadre étant configuré de sorte que la force de sollicitation soit empêchée d'affecter l'alignement relatif des engrenages du train d'engrenages.

2. Débitmètre selon la revendication 1, dans lequel le cadre comprend des premier (40a) et second (40b) composants de cadre supportant entre eux les engrenages du train d'engrenages, la partie de cadre (52) étant sur le premier composant de cadre de sorte que la force de sollicitation soit appliquée seulement à travers le premier composant de cadre.

3. Débitmètre selon la revendication 1 ou 2, dans lequel la force de sollicitation est appliquée dans une direction perpendiculaire aux axes de rotation des engrenages (44, 45, 46).

4. Débitmètre selon une quelconque revendication précédente, dans lequel la partie de cadre est une surface plate (52) destinée à être montée sur une surface plate complémentaire (54) des moyens de montage.

5. Débitmètre selon les revendications 2 à 4, dans lequel chacun des engrenages (44, 45, 46) se trouve sur un axe respectif (48) et les axes sont parallèles, et dans lequel les premier et second composants de cadre (40a, 40b) sont configurés respectivement pour supporter des extrémités respectives des axes.

6. Débitmètre selon la revendication 5, dans lequel le premier composant de cadre (40a) comprend une paroi de support (50) pour supporter une première extrémité respective de chacun des axes, et dans lequel la partie de cadre se trouve sur une paroi de montage (52) perpendiculaire à la paroi de support d'axe.

7. Débitmètre selon la revendication 6, dans lequel le premier composant de cadre comprend une seconde paroi de support (56) pour supporter le dispositif d'affichage de compte (30), la seconde paroi de support étant perpendiculaire à la paroi de support d'axe (50).

8. Débitmètre selon les revendications 2 à 7, dans lequel le second composant de cadre (40b) est une plaque de support d'axe et se trouve sur un plan parallèle à la paroi de support (50) du premier composant de cadre.

9. Débitmètre selon la revendication 7 ou la revendication 8 lorsqu'elle dépend de la revendication 7, dans lequel la paroi de support d'axe (50) et la seconde paroi de support (56) se trouvent sur des plans parallèles, et positionnées aux extrémités opposées de la paroi de montage.

10. Débitmètre selon une quelconque revendication précédente, dans lequel les moyens de montage comprennent deux blocs espacés l'un de l'autre (74a, 74b) sollicités en éloignement l'un de l'autre dans une direction latérale relative.

11. Débitmètre selon la revendication 10, dans lequel les blocs (74a, 74b) sont sollicités dans une direction latérale par rapport au dispositif d'affichage de compte (30).

12. Débitmètre selon la revendication 10 ou 11 lorsqu'elle dépend de la revendication 4, dans lequel chacun des deux blocs comprend une surface plate (54a, 54b) sur un premier côté et une surface de rampe (78a, 78b) des deux blocks sur un côté opposé, les surfaces plates fournissant ladite surface complémentaire (54).

13. Débitmètre selon une quelconque revendication précédente, dans lequel un des engrenages du train d'engrenages peut être directement entraîné par un arbre d'entraînement (26) qui est rotatif en réponse à un fluide s'écoulant à travers le débitmètre, et dans lequel les axes de rotation (48) des engrenages sont parallèles à l'arbre d'entraînement.

14. Débitmètre selon une quelconque revendication précédente, dans lequel le dispositif d'affichage de compte comprend un engrenage à vis sans fin (72), et un premier des engrenages (46) du train d'engrenages est agencé pour entraîner une vis sans fin (70) pour entraîner l'engrenage à vis sans fin (72).

15. Débitmètre selon une quelconque revendication précédente, dans lequel le dispositif d'affichage de compte (30) et les moyens d'entraînement (32) comprennent des parties complémentaires mâles (62) et femelles (64) pour monter le dispositif d'affichage de compte (30) sur les moyens d'entraînement (32).

16. Débitmètre selon la revendication 7 ou une quelconque revendication dépendante de celle-ci, dans lequel la seconde paroi de support (56) du premier composant de cadre (40a) comprend les parties femelles (64).
